# NEW EUROPEAN PATENT SPECIFICATION

(11) **EP 0 968 473 B2**
(45) Date of publication and mention of the opposition decision: **02.12.2015**
(45) Mention of the grant of the patent: 20.04.2005
(21) Application number: 98905149.5
(22) Date of filing: 27.02.1998
(51) Int. Cl.: G06F 17/13, G06F 17/50, B29C 33/00, B29C 45/02, B29C 45/76, G06T 17/20

(54) **METHOD FOR MODELLING THREE-DIMENSIONAL OBJECTS AND SIMULATION OF FLUID FLOW**
VERFAHREN ZUM MODELLIEREN VON DREIDIMENSIONALEN OBJEKTEN UND SIMULATION VON FLÜSSIGKEITSSTRÖMUNG
PROCEDE DE MODELISATION D'OBJETS TRIDIMENSIONNELS ET SIMULATION D'UN ECOULEMENT DE FLUIDE

(30) Priority: 20.03.1997 AU PO574697; 17.09.1997 US 932125
(43) Date of publication of application: 05.01.2000
(73) Proprietor: MOLDFLOW PTY. LTD., Kilsyth, VIC 3137 (AU)
(72) Inventor: YU, Hua, Gang, Ringwood North, VIC 3134 (AU); THOMAS, Roland, Wayland, MA 01778 (US)
(74) Representative: Fleuchaus, Michael A.
(86) International application number: PCT/AU1998/000130
(87) International publication number: WO 1998/043179

(56) References cited:
- EP-A- 0 698 467
- US-A- 5 189 626
- US-A- 5 439 622
- US-A- 5 572 434
- DEITZ DAN: "Optimizing injection-molded parts" MECH ENG;MECHANICAL ENGINEERING OCT 1996, vol. 118, no. 10, October 1996 (1996-10), pages 89-90, XP000996910
- MACHINE DESIGN, 6 February 1997, PAUL DVORAK, "Software Lets Molders Make Every Shot Count", pages 46-50, XP000996907
- PROCEEDINGS OF THE COMPUTERS IN ENGINEERING CONFERENCE AND THE ENGINEERING DATABASE SYMPOSIUM ASME, 1995, New York, US, YONG-GU LEE et al., "Shell Mesh Generation by Medial Axis Transformation", pages 713-727, XP001004772
- JOURNAL OF ENGINEERING FOR INDUSTRY, Vol. 114, No. 2, May 1992, HIMASEKHAR K. et al., "CAE of Mold Cooling in Injection Molding Using a 3D Numerical Simulation", pages 213-221, XP000298165
- HEAT TRANSFER JAPANESE RESEARCH WASHINGTON D.C.: SCRIPTA PUBLICATIONS CORPORATION, Vol. 21, No. 7, 1992, YAMAMOTO S. et al., "Unsteady Thermal Analysis of an Injection Mold by the Boudary-Element Method", pages 666-677, XP001004794
- L. S. TURNG ET AL.: 'On the Simulation of Microelectronic Encapsulation with Epoxy Molding Compound' ANTEC'92 pages 84 - 88
- "Development of a radial flow analysis for injection molding" (Kazmer), published October 1991
- R-Y CHANG ET AL.: 'Integral Consitutive Model', 1994, HANSER PUBLISHERS, MUNICH pages 365 - 372
- W. F. ZOETELIEF: 'Multi-component Injection Moulding', 1995, CIP-DATA KONINKLIJKE BIBLIOTEK, DEN HAAG pages 1 - 127
- J. KOPLIK: 'Creeping flow in two-dimensional networks' JOURNAL FLUID MECH. vol. 119, 1982, pages 219 - 247
- M. A. IOANNIDIS ET AL.: 'Network modelling of pore structure and transport properties of porous media' CHEMICAL ENGINEERING SCIENCE vol. 48, no. 5, 1993, pages 951 - 972
- D. DING ET AL.: 'Finite element simulation of an injection moulding process' INTERNATIONAL JOURNAL FOR NUMERICAL vol. 7, no. 7, 1997, pages 751 - 766
- R-Y- CHANG ET AL.: 'A Unified K-BKZ Model for Residual Stress Analysis of Injection Molded Three-Dimensional Thin Shapes' POLYMER ENGINEERING AND SCIENCE vol. 35, no. 22, November 1995, pages 1733 - 1747
- L.F.A. DOUVEN ET AL.: 'The computation of properties of injection-moulded products', vol. 20, 1995, ELSEVIER SCIENCE LTD. pages 403 - 457
- D.C. CONSTABLE ET AL.: 'Three dimensional bi-component extrusion simulations by the boundary element method' COMPUTATIONAL MECHANICS vol. 16, 1995, pages 114 - 123
- Y.-E. YOO ET AL.: 'Numerical simulation of the resin transfer mode filling process using the boundary element method' POLYMER COMPOSITES vol. 17, no. 3, 1996, pages 368 - 374

## Description

This invention relates to a method for modelling solid objects, particularly for use in the simulation of fluid flow, to be used for example to simulate prototypes before production. In a preferred embodiment the method is used in the design of articles to be manufactured by injection molding, preferably from molten plastic materials.

The modelling of solid objects is employed in various fields. Such modelling is used, for example, in the simulation of injection molding. In that field, it is widely recognized that the filling and packing phases of injection molding have a significant effect on the visual and mechanical properties of a molded object. Simulation is employed to analyse proposed shapes and injection points, and thus the final quality of the ultimate article. A requirement of any injection mold is that it can be filled with molten polymer given the pressure limits of a real injection molding machine. Simulation can provide information as to whether the mold can be filled and the fill pattern that will be achieved. By using simulation, it is possible to determine optimum gate locations and processing conditions. It is possible to predict the location of weld lines and air traps. Economic benefit is derived from simulation because problems can be predicted and solutions tested prior to the actual creation of the mold. This eliminates costly re-working and decreases the time required to get an object into production.

Simulation technology has been developed and generally uses finite element/finite difference techniques to solve the governing equations of fluid flow and heat transfer. In order to minimize the time required for analysis and hence the required computer resources, the Hele-Shaw approximation is invoked to simplify the governing equations. It has been found that this simplification provides sufficient accuracy for injection molding but does create the need for specific modelling of the computational domain.

Injection molding is an excellent process for repetitively manufacturing large numbers of objects or parts having complicated geometries. A characteristic of injection molded components is that the thickness of the wall is generally a small fraction of the overall length of the component. In view of the low thermal conductivity of plastics, this physical characteristic is essential to achieve the rapid cycle times that make the process so attractive.

The flow of melt in an injection mold is determined by the familiar conservation laws of fluid mechanics. Solution of the equations in their full generality presents several practical problems. Owing to the characteristically thin walls of molded components, however, it is possible to make some reasonable assumptions that lead to a simplification of the governing equations. These simplified equations describe what is called Hele-Shaw flow and may be readily solved in complex geometries using an appropriate numerical technique such as the finite element and/or finite difference method.

Injection molding simulation is now routinely regarded as a desirable aspect of plastic part design. Similarly, improved computer aided drafting (CAD) technology has led to the widespread use of surface and solid modelling. Associated advantages of this are the ability to better visualize an object, to use numerical cutting, and the possibility of achieving more concurrency in engineering design and manufacture. When using the Hele-Shaw approximation, plastic CAE analysis still requires the use of a surface model, representing the midplane of the real component, which is then meshed with triangular or quadrilateral elements to which suitable thicknesses are ascribed. The preparation of such a mesh can take a considerable amount of time, and requires substantial user input; owing to the labour intensive nature of this step, model preparation requires the greatest share of time when performing a molding simulation and makes this technique time consuming. In addition, as model preparation is an interactive task, it has a higher cost associated with it than simply running a computer program.

Dan Deitz, in "Optimizing injection-molded parts" (Mechanical Engineering, 118(10) (1996) 89-90), discusses an automated process for creating a midplane mesh representation of a three-dimensional object. This approach is described as successful in most cases, but in some instances the resulting midplane required improvement by manual manipulation.

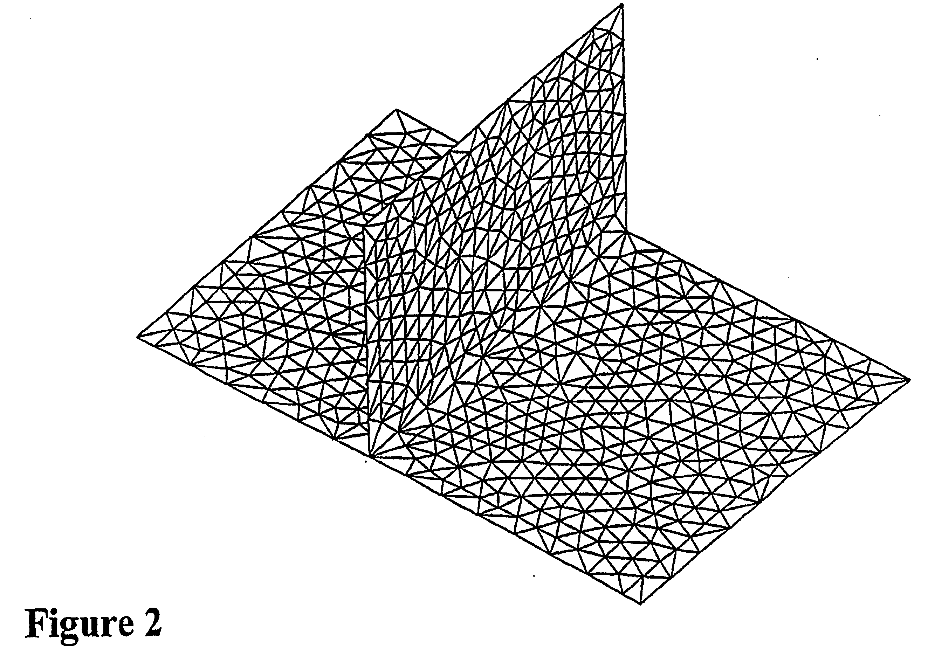

This conventional technique for the simulation of three dimensional bodies is illustrated in figures 1 to 3 of the accompanying drawings in which:
Figure 1 is a representative example of an article to be manufactured by injection molding in the form of a T-shaped component;
Figure 2 is a midplane representation of the component of figure 1 that is meshed; and
Figure 3 is a view of the major results from a conventional analysis showing the position of the advancing melt at given times.

One solution to the above shortcomings is to avoid the use of the Hele-Shaw equations and solve the governing equations in their full generality. This has inherent problems owing to the thin walled nature of injection molded objects and parts. To perform such an analysis, the region representing the mold cavity into which molten polymer will be injected must be divided into small sub-domains called elements. Usually these elements are of tetrahedral or hexahedral shape. This process of subdivision is called meshing and the resultant network of tetrahedra or hexahedra the mesh.

EP 0 698 467 discloses such an approach, in which a three-dimensional model of a cavity where fluid flows is divided into a plurality of small three-dimensional elements; the flow conductance of the fluid at each element is determined as a small value when the element is close to the cavity wall and as a large value when the element is far from the cavity wall, and the pressure of the fluid at each element is determined based on these flow conductances. This model is then used for analyzing a fluid flow process such as injection molding.

Owing to the complicated shape of many injection molded objects and parts it is generally not possible to automatically mesh the cavity with hexahedral elements. It is possible, however, to mesh the domain automatically with tetrahedral elements. The thin walled nature of injection molded objects and parts means that the plastic is subject to a huge thermal gradient in the thickness direction of the component. This requires that there be a reasonable number of elements through the thickness. Using existing meshing technology, the result is a mesh consisting of hundreds of thousands or even millions of elements. The high number of elements makes the problem intractable for any but the fastest super computers. These are rarely found in industry, being extremely costly to purchase and maintain. Thus, although three dimensional simulation provides a solution that avoids the requirement of a midplane model, it is not as yet a practical solution.

It is an object of the present invention, therefore, to provide a method for the simulation of flow in a three dimensional object that can produce simulations substantially automatically, without requiring the solution of the governing equations in their full generality.

This object is achieved by a method according to claim 1.

It should be noted that, in the context of the invention, generally opposed surfaces may be parallel, inclined to each other, meet at an acute angle or otherwise, and need not be planar, provided that a reasonable thickness or thicknesses may be assigned to the space between the surfaces.

Preferably said injection point is linked to all locations from which flow may emanate from substantially the commencement of said flow analysis.

Preferably said injection point remains so linked at substantially all times in said flow analysis subsequent to said linking.

Thus, although the injection point must be linked to all these locations at some point in the flow analysis, and essentially continuously thereafter, the injection point may remain unlinked initially. Although this may decrease the accuracy of the final analysis adversely, it may nevertheless allow the analysis to yield useful results.

Preferably said injection is one of a plurality of injection points.

Preferably said synchronization of said flow fronts is checked periodically.

Preferably said flow fronts are synchronized if found not to be or no longer synchronized.

Preferably said checking is performed at each time step.

More complex parts require synchronization at each calculational time step.

Preferably said first and second generally opposed surfaces are one of a plurality of pairs of generally opposed surfaces.

Thus, where the existing techniques utilize a single, midplane representation of the object in which flow is to be modelled, and perform a simulation with this representation, the method according to the present invention utilizes only the outer surfaces defining the three dimensional object to create a computational domain. These correspond to representations (in a preferred embodiment, meshed representations) of the domain in which flow is to be simulated, and would comprise, for example, meshed representations of the top and bottom surfaces of a part. Thus, in such an example the invention could be said to utilize an outer skin mesh rather than a midplane mesh. Elements of the two surfaces are matched, based on the ability to identify a thickness between such elements. An analysis, substantially along conventional lines (by means, for example, of the Hele-Shaw equations), is then performed of the flow in each of these domains in which flow is to be simulated, but linked to ensure fidelity with the physical reality being modelled.

Preferably any unmatched elements of said first and second surfaces, being elements that could not be matched, are assigned thicknesses being the average of the thicknesses of adjacent matched elements where such adjacent matched elements exist, or of adjacent unmatched elements where such adjacent matched elements do not exist and said adjacent unmatched elements have been assigned thicknesses.

Thus, eventually all matched and unmatched elements of the first and second surfaces may be assigned thicknesses.

Preferably each element of an edge surface, being a surface between said first and second surfaces, and adjacent to either of said first or second surface is assigned a thickness proportional to the thickness of the element of said first or second surface to which said element of said edge surface is adjacent.

Preferably each said element of an edge surface is assigned a thickness between 0.5 and 1.5 times said thickness of the element of said first or second surface to which said element of said edge surface is adjacent.

Preferably each said element of an edge surface is assigned a thickness between 0.7 and 0.9 times said thickness of the element of said first or second surface to which said element of said edge surface is adjacent.

Still more preferably each said element of an edge surface is assigned a thickness 0.75 times said thickness of the element of said first or second surface to which said element of said edge surface is adjacent.

Preferably each element of an edge surface not adjacent to said first or second surface is assigned a thickness being the average of the thicknesses of adjacent elements of said edge surface that have been assigned thicknesses.

Assigning a thickness, therefore, to every element of both surfaces and of edge surfaces ensures that the greatest accuracy will be achieved in the simulation.

Preferably flow is simulated at a rate directly proportional to a desired flow rate for the object.

The desired flow rate will usually be a flow rate selected by a user based simply on the volume of the object to be filled and the desired fill-time.

Preferably said rate is proportional to the ratio of computational domain volume of said object to real volume of said object.

More preferably said rate is substantially equal to the ratio of said computational domain volume to said real volume.

This approach may be used to compensate for the modification of the effective volume of the object being modelled, owing to the use of two domains (for example, associated with the top and bottom surfaces), rather than one meshed domain as in the midplane approach. The computational domain volume is thus this effective volume used for the purposes of modelling the object, which most preferably will be approximately double the real volume.

Preferably the method is performed with first and second representations of said first and second surfaces respectively comprising first and second meshes or lattices respectively, wherein said elements are interstices of said first and second meshes or lattices.

Preferably said elements are triangular or quadrilateral.

Preferably, when said elements are triangular, said elements are substantially equilateral.

Preferably said method includes creating said first and second representations.

In one embodiment the method includes creating improved representations of said first and second surfaces, whereby said elements are elements of said improved representations and said method is performed with said improved representations.

Preferably said first and second representations are, or are a part of, a representation or representations for stereolithography of said object.

Thus, computer representations of the two surfaces may be provided as input to the method, may be created by the method, or - if provided with representations of the surfaces - the method may create improved representations. As described above, particularly preferred representations include those with elements comprising equilateral triangles.

In one embodiment of the invention the method described above is performed by a computer running a computer program encoding said method for simulating fluid flow.

Preferably said method optionally includes corrections for non-isothermal temperature fields and/or non-Newtonian fluids.

Thus, known techniques for including the effects of non-isothermal temperature fields and non-Newtonian fluids may be included so that more physically faithful simulations may be performed, as well as faster simulations without these corrections when speed is desirable, even at the expense of precision.

In an embodiment of the present invention said injection point is linked to all locations on said first and second improved representations from which flow may emanate such that resulting flow fronts along said first and second improved representations are synchronized.

Preferably the first and second representations are, or are a part of, a representation or representations for stereolithography of said object.

Preferably the first and second improved representations comprise small equilateral triangular elements.

According to a further broad aspect of the invention there is provided a computer provided with or running a computer program encoding the method for simulating fluid flow described above.

In a further broad aspect of the invention there is provided a computer storage medium provided with a computer program embodying the method for simulating fluid flow described above.

According to an embodiment of the present invention there is provided a method for simulating fluid flow within a three dimensional object having first and second generally opposed surfaces including:
matching each element of said first surface with an element of said second surface between which a reasonable thickness may be defined, wherein matched elements of said first surface constitute a first set of matched elements and matched elements of said second surface constitute a second set of matched elements,
specifying a fluid injection point,
performing a flow analysis using each set of said matched elements, and
synchronizing flow fronts resulting from said flow analysis along said first and second surfaces.

Preferably said flow fronts are synchronized from substantially the commencement of said flow analysis.

Alternatively said flow fronts are first synchronized after the commencement of said flow analysis.

According to an embodiment of the present invention there is provided a method for simulating fluid flow within a three dimensional object having first and second generally opposed surfaces including:
matching each element of said first surface with an element of said second surface between which a reasonable thickness may be defined, wherein matched elements of said first surface constitute a first set of matched elements and matched elements of said second surface constitute a second set of matched elements,
specifying a fluid injection point,
performing a flow analysis using said first set of matched elements,
adapting said flow analysis to said second set of matched elements, and
synchronizing flow fronts resulting from said flow analysis and said adaptation of said flow analysis along said first and second surfaces.

Thus, it is possible in some cases to perform the method using only one of the sets of elements, and mapping the result onto the other set, and performing minor adaptation of the analysis to allow for any differences between the two surfaces.

Preferably the method is performed with first and second representations of said first and second surfaces respectively comprising first and second meshes or lattices respectively, wherein said elements are interstices of said first and second meshes or lattices.

Preferably the elements are triangular, and most preferably equilateral triangles.

Preferably the elements are quadrilateral.

Preferably the method includes creating said first and second representations, and more preferably creating improved representations, either from the original surfaces or from the first and second representations, and performing the method with elements of the representations or improved representations.

In all the above methods according to the present invention aspects it is preferred that the synchronization comprises matching pressure and temperature.

In an embodiment of the present invention the method includes specifying a plurality of fluid injection points, wherein said injection points are linked to all locations on said first and second surfaces from which flow may emanate such that resulting flow fronts along said first and second surfaces have matched flow rates.

A preferred embodiment of the invention will be described, by way of example, with reference to the accompanying drawings, in which:

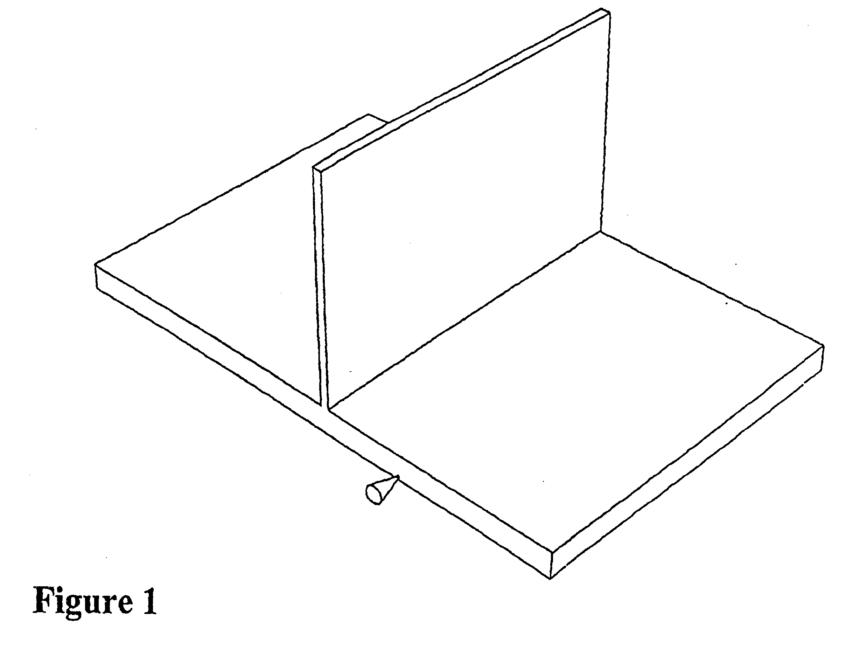

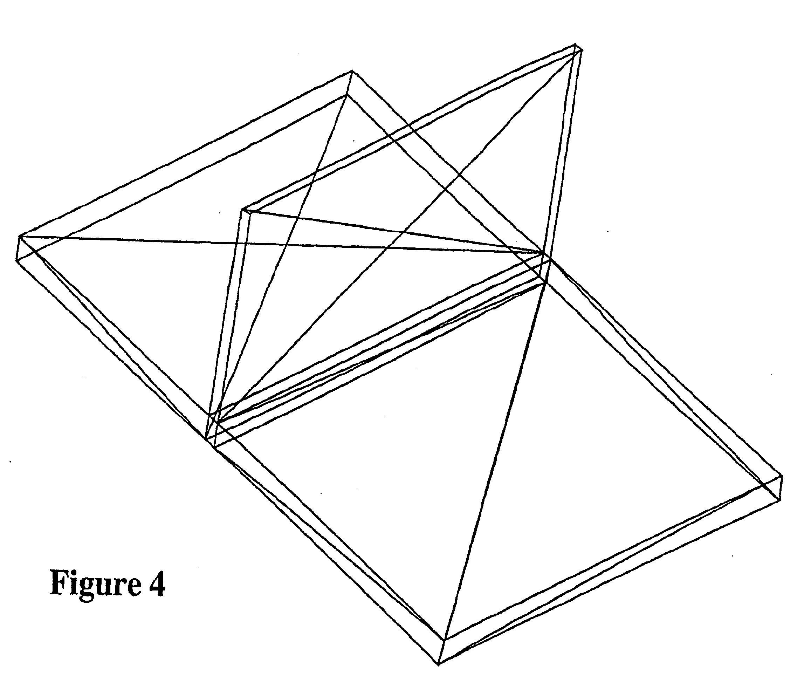

Figure 4 is an example of a stereolithography mesh of the T-shaped object of figure 1;

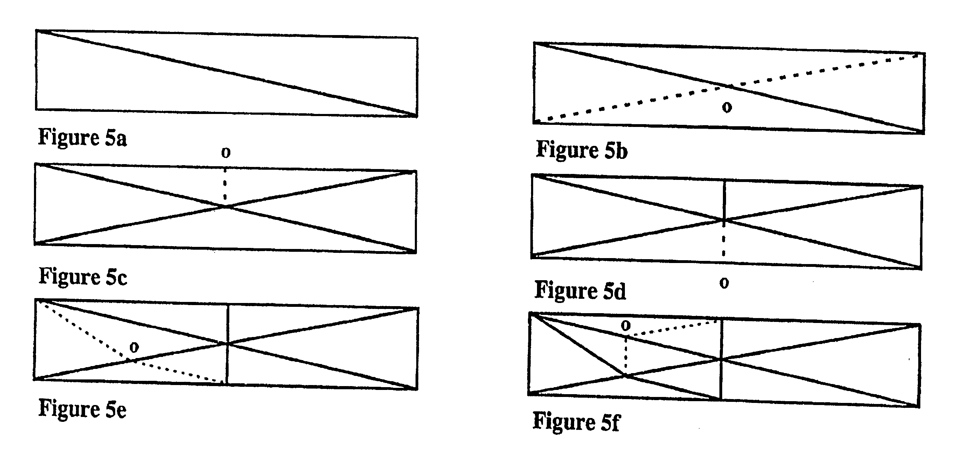

Figure 5a shows an initial mesh used in a remeshing method according to the present invention;
Figures 5b-f show the mesh of figure 5a progressively remeshed according to the remeshing method;

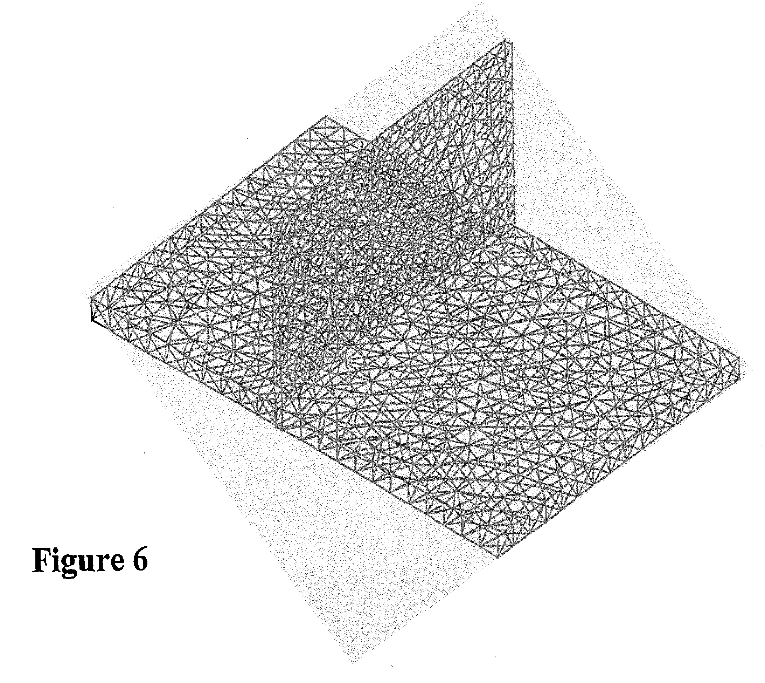

Figure 6 shows the mesh of figure 4, remeshed according to the preferred embodiment of the present invention;

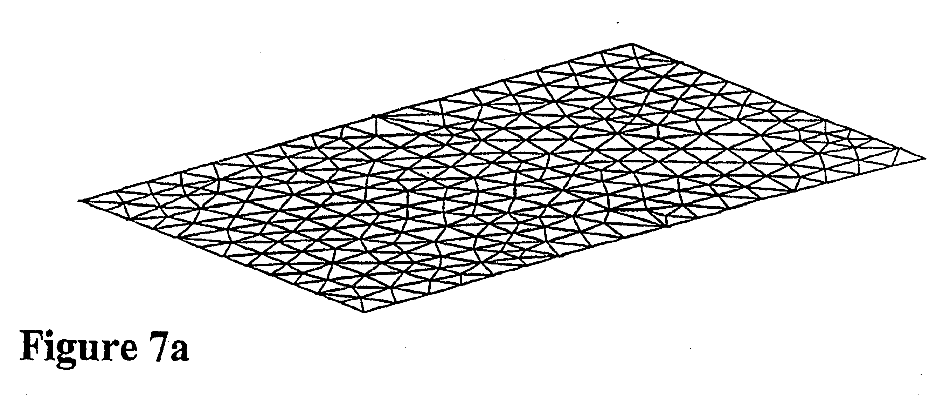

Figure 7a is a view of a mesh produced by conventional modelling techniques for a flat plate;

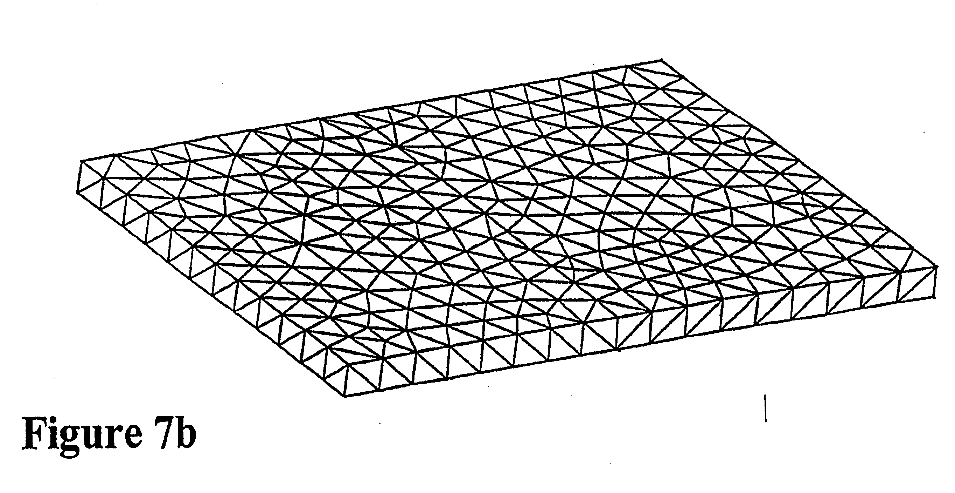

Figure 7b is a view of a corresponding mesh produced for a flat plate according to a preferred embodiment of the present invention;

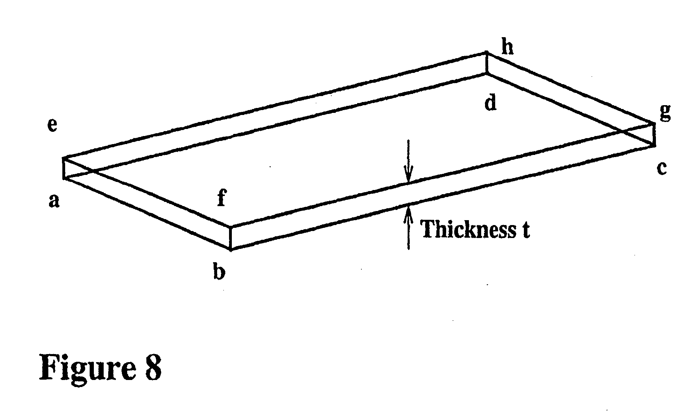

Figure 8 illustrates surface matching for a flat plate according to the preferred embodiment;

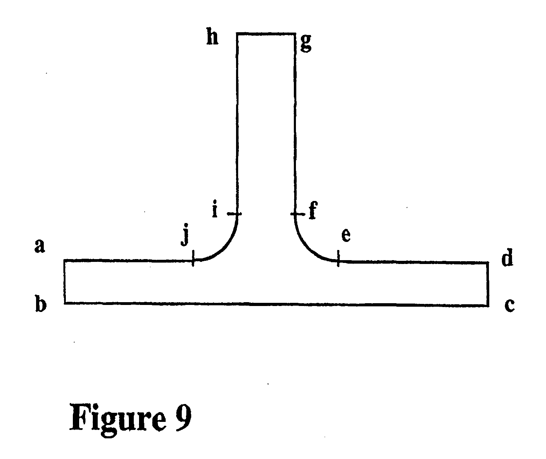

Figure 9 is a view similar to figure 8 illustrating in cross-section the edges, matched surfaces and unmatched surfaces of another T-shaped object according to the preferred embodiment;

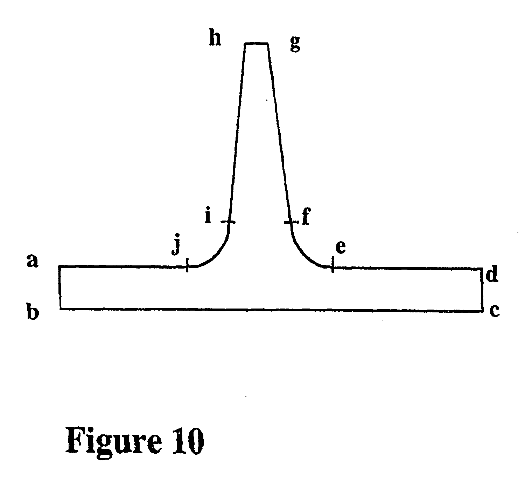

Figure 10 is a cross-sectional view illustrating the edges, matched surfaces, matched tapered surfaces, unmatched surfaces and unmatched edges of yet another T-shaped object according to the preferred embodiment;

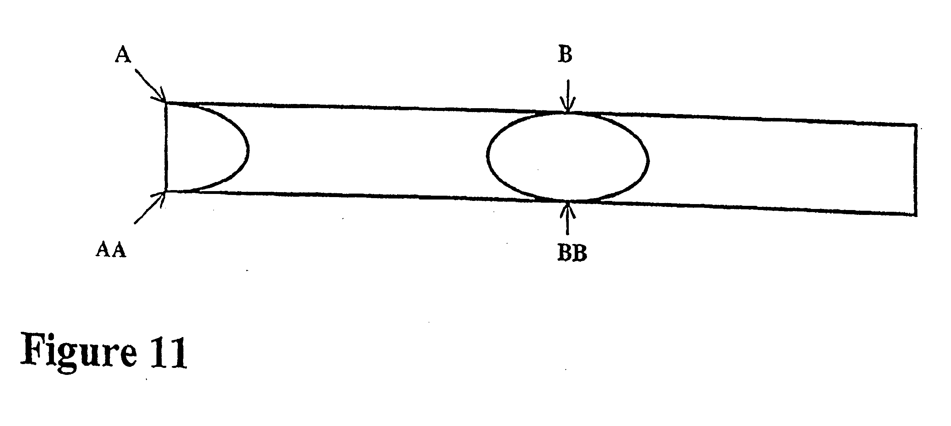

Figure 11 is a view of a simple object showing injection points;

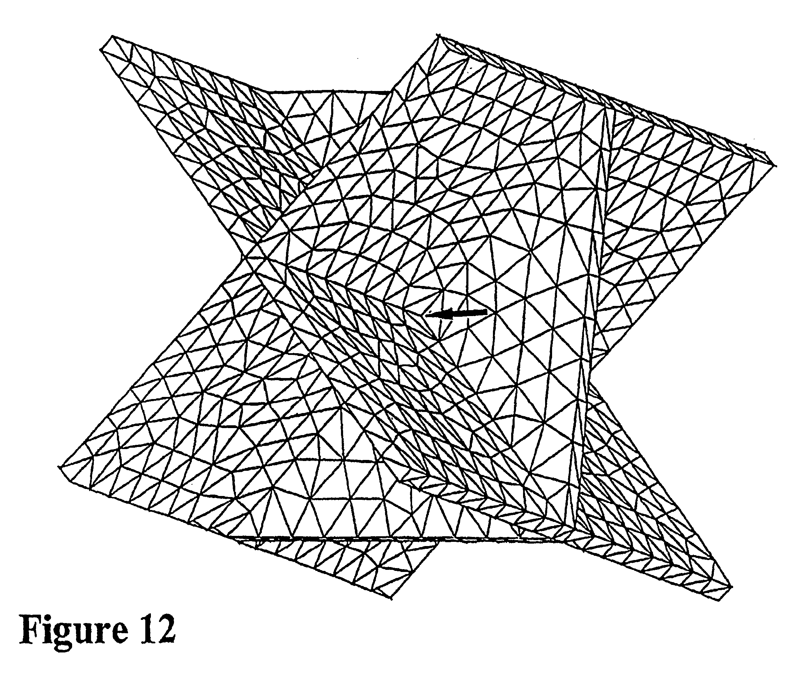

Figure 12 is a view of an object comprising intersecting plates with a user selected injection point according to the preferred embodiment;

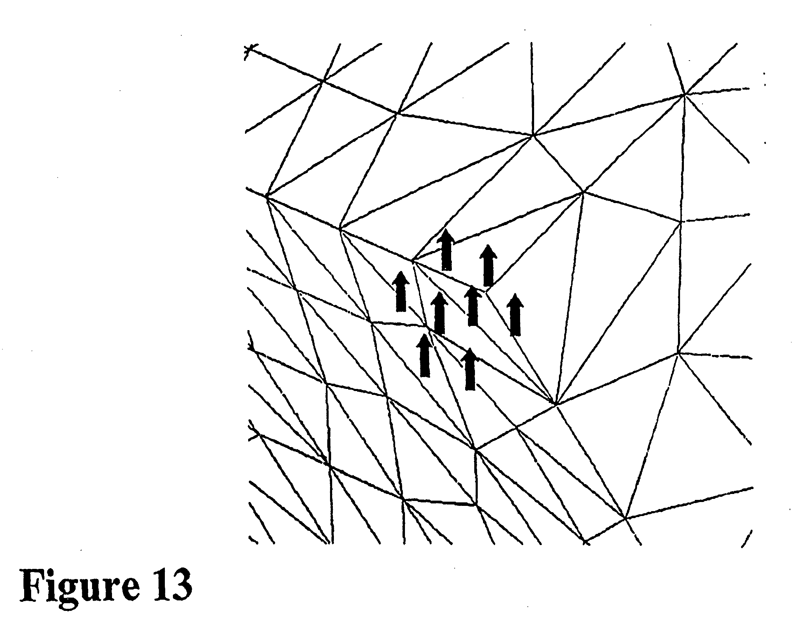

Figure 13 is a enlarged view of the object of figure 12 showing the injection points required to allow flow to emanate correctly from the selected point according to the preferred embodiment;

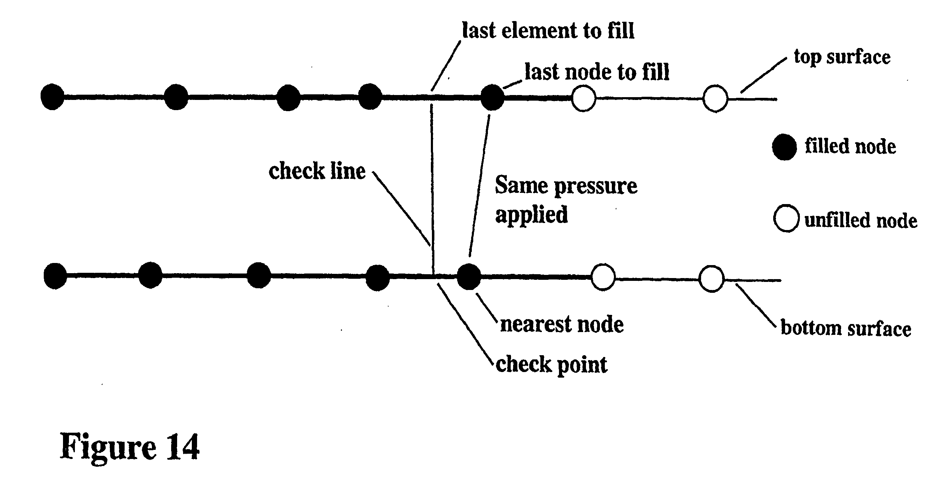

Figure 14 is a cross-section of a plate, with a flow front advancing from the left and leading a little on the top surface according to the preferred embodiment;

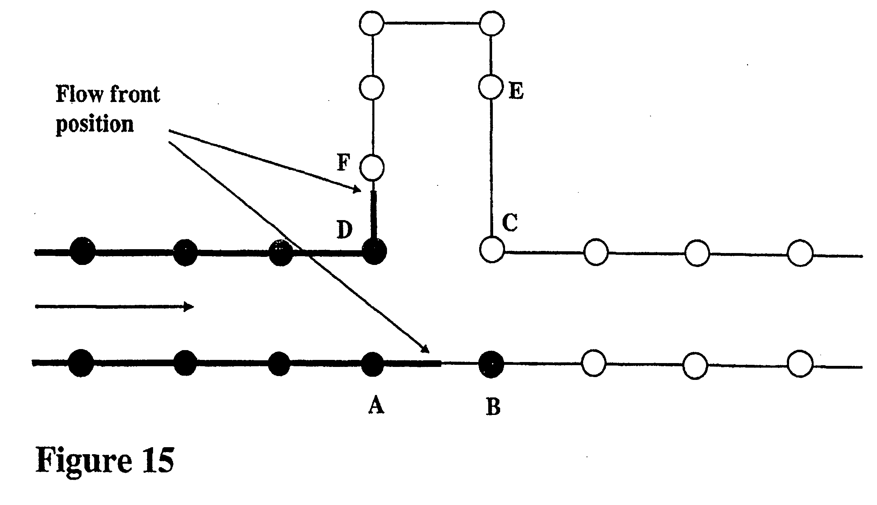

Figure 15 illustrates in a cross-sectional view the synchronization of flow in a ribbed plate, with the flow splitting and also filling a vertical rib according to the preferred embodiment;

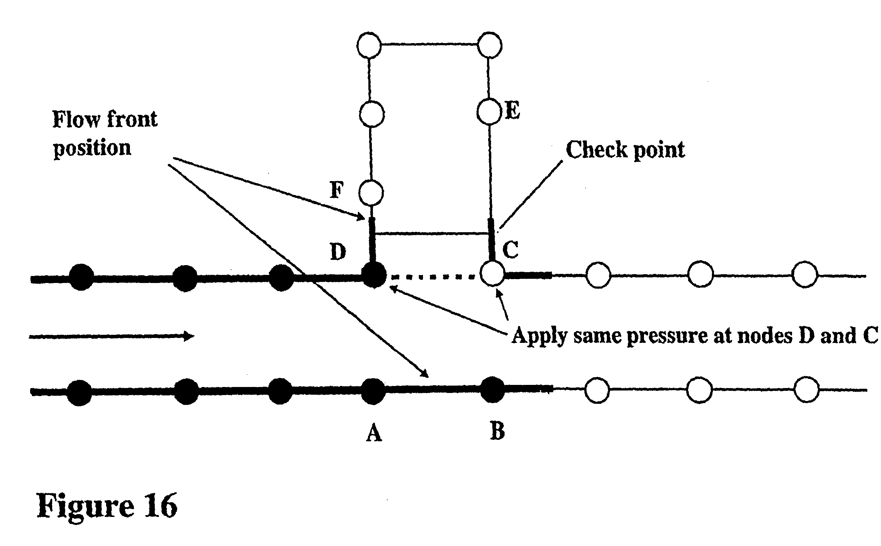

Figure 16 illustrates in a cross-sectional view the assignment of identical pressures at nodes to synchronize flow fronts at a rib according to the preferred embodiment; and

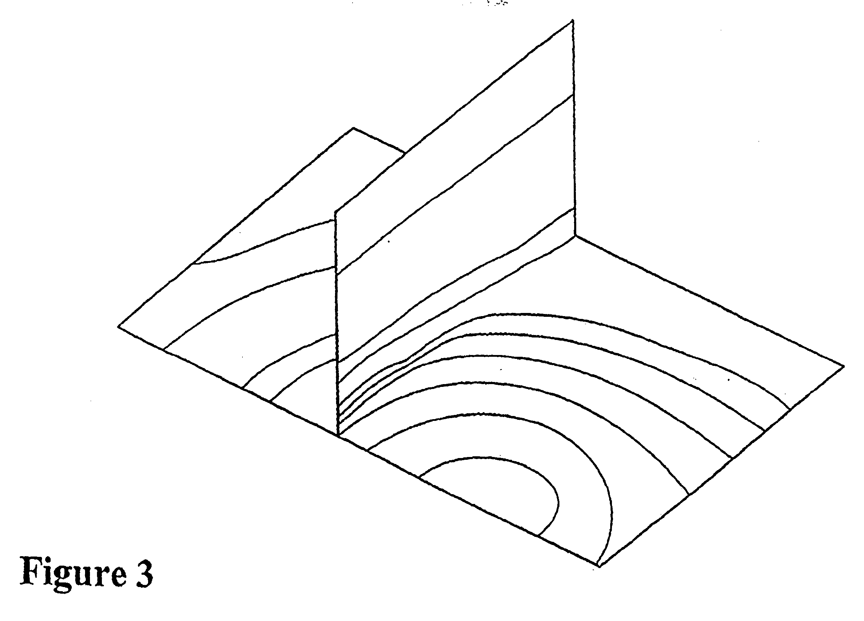

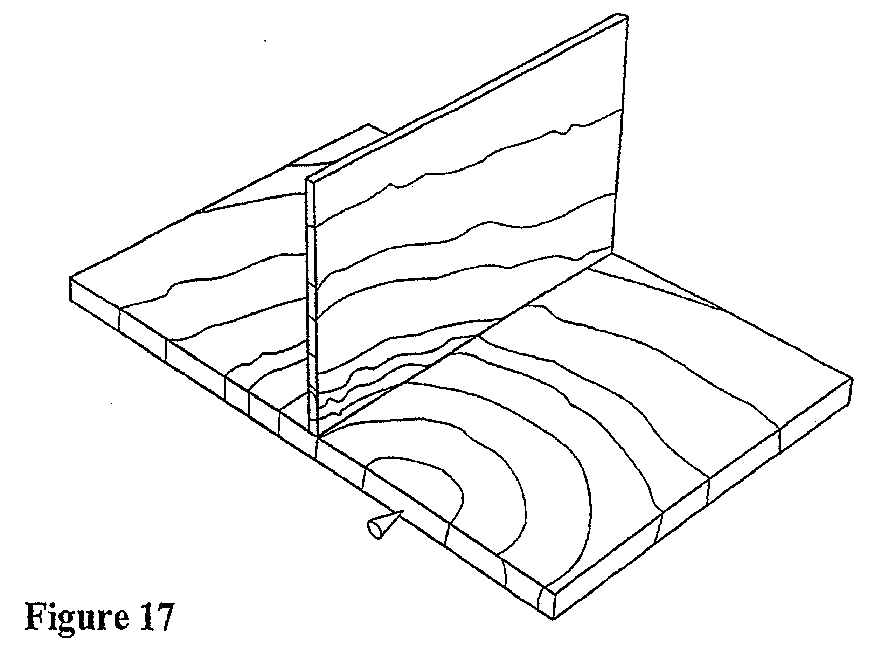

Figure 17 is a view similar to figure 3 generated according to the preferred embodiment of the present invention.

A method for simulating fluid flow within a three dimensional object according to the present invention involves three main steps:
1) Preparation of geometry,
2) Selection of injection points, and
3) Analysis.
Before these steps are effected, however, the input for the simulation is prepared. Mesh generators for producing finite element meshes are generally an expensive addition to the base CAD system. Consequently many CAD installations have no finite element analysis (FEA) mesh generation capability. In order to facilitate the implementation of the invention, the method has been designed to avoid the need for a mesh generator. This is done by using the type of mesh available for stereolithography. Stereolithography, a prototyping technology that is widely employed in industry, is used to produce prototype components for assembly or evaluation. It requires a stereolithography apparatus and takes as input a computer file known as a "SLA" file. The ability to output SLA files is common in CAD systems. However, the type of triangulation created is not good enough for FEA. Characteristic of the SLA file is the inclusion of several very long, narrow triangles of high aspect ratio as shown in figure 4.

A method in accordance with the present invention includes, therefore, a remeshing algorithm (or remesher) that uses as input the triangles from a stereolithography SLA (or similar) file and remeshes to produce a mesh that may be used in analysis.

There are several steps involved in the input of a stereolithography mesh and its refinement into elements for analysis. These steps are:
- Input of mesh,
- Checking of mesh,
- Classification of mesh into surfaces, and
- Remeshing.
Each of these is described below.

### Input of Mesh

In the preferred embodiment, the input mesh is of the form used for stereolithography. Alternatively, however, the input could be IGES surfaces (which would then be meshed internally), a surface mesh of quadrilaterals or a mix of quadrilaterals and triangles, tetrahedral or hexahedral meshes.

### Checking of mesh

The input mesh is checked to ensure that it is closed and orientable. The mesh is consistently oriented so that a unit normal to each element points outward from the internal volume defining the solid region that represents the object or part being modelled. The volume of this region and the surface area of the mesh are calculated and stored. The number of parts defined by the input mesh is also determined.

### Classification of mesh into surfaces

The following properties for each element in the mesh are noted or calculated, and stored:
- Area,
- Normal at the element centroid,
- Edge lengths of the element,
- Internal angles at the vertices of the elements,
- Adjacent elements (the elements attached to each side of the element under consideration), and
- Bending angle between adjacent elements (the angle between normals of adjacent elements).
Nodal properties are then noted, calculated and stored. These are:
- Measure of minimum curvature (calculated by looking at the elements attached to a node and noting the angle between each adjacent pair of elements, whereby the measure of minimum curvature is then the smallest such angle between attached pairs of elements),
- Connecting elements (the set of elements connected to the node), and
- Number of edges connected to the node.
Surface edges are then calculated using a value of bending angle to group elements into surfaces. Surfaces so formed are then classified into
- planar surfaces, and
- low curvature surfaces.
Further classification is then done to produce high curvature surfaces and edges. The following properties of edges are noted or calculated and stored:
- Length,
- Bending angle,
- Direction of bending (in or out), and
- Adjacent Elements.
Surface loops are then created. These are defined to be the oriented edges of surfaces. It should be noted that a surface with a hole in it will have two associated loops - one for the outer edges and one describing the interior hole. Loop properties are then noted or calculated and stored:
- Length, and
- Edges connected to loop.
The following surface properties are noted or calculated and stored:
- Perimeter,
- Area,
- Nodes in surface,
- Elements in surface,
- Edges, and
- Minimum measure of curvature.

### Remeshing

With the surfaces classified, the mesh associated with each surface is refined using a bisection algorithm which bisects the longest side of a triangle and creates extra elements. This is illustrated in figures 5a-f. Figure 5a shows the initial mesh. The mesh is refined by defining a node at the mid point of the longest element side and extending lines to vertices to define extra triangles. In figures 5b to 5f, the midpoint of the longest side (denoted by o) and the dotted lines extending from this point define the new elements. Remeshing continues until the elements satisfy a criterion on size.

The result of the remeshing algorithm when applied to the mesh shown in figure 4 is shown in figure 6. In this regard the ideal triangle is equilateral: it may be seen that the triangles in figure 6 are far more uniform and closer to this ideal.

The method will thus accept as input stereolithography files (usually generated with a ".st1" filename extension) and other files that are similar such as "render" files (produced by "Pro-Engineer" with a ".slp" extension).

In practice any file format that describes a mesh (of, for example, a lattice or quadrilaterals) covering the outer surfaces of the solid region may be used as input to the invention. The remesher is always used to improve the mesh quality and produce the triangular mesh for subsequent processing.

The first step is then the preparation of the geometry, in which the geometry of the three dimensional CAD solid model is processed by conventional techniques to provide a surface mesh covering the outer surfaces of a solid body, rather than a midplane mesh as required by the conventional simulation approach. This distinction is depicted in figures 7a and 7b. Figure 7a shows the midplane mesh for a simple plate required by the conventional technique, whereas figure 7b shows the mesh employed according to the present invention for the same object. Further, the flow front must be synchronized on both sides of the surface in which the material flows. If material is injected at the centre of the plate, then, in the conventional case, the material flows to the boundary of the part or object and stops without any difficulty. For the surface mesh on the solid model (figure 7b) the material will flow to the outer edge, across the edge and then under the top surface. This is clearly not indicative of the physical phenomenon of flow in a plate and so, according to the invention, there are imposed some constraints on the flow when using the surface mesh. These constraints are that the injection point must link to all surfaces from which flow will emanate and the flow front must be synchronized along the top and bottom meshes of the surface mesh. Preferably this link is established from the commencement of the flow analysis, but a successful (if somewhat less accurate) analysis of the flow can still be performed is this linking commences subsequently. To perform these tasks the surface mesh must be categorized into surfaces which are then further classified to facilitate injection node selection and synchronization. Thus, according to the present invention, the surface mesh is then grouped into individual surfaces and classified. The categories of surfaces are:
- Matched,
- Unmatched, and
- Edges.
Matched surfaces are defined to be those that have a relationship with another surface such that a notion of thickness between them can be sensibly defined. Figure 8 illustrates this idea. Surfaces abcd and efgh may clearly be associated so that the thickness t between them is defined. Surfaces abfe, bcgf, cdhg and daeh are edge surfaces and unmatched.

Figure 9 further clarifies these concepts. This figure shows a cross-section through a filleted rib. Here ab, cd and gh are on edge surfaces. Lines aj and ed are matched to bc, fg and hi are matched and the curved sections ij and ef are unmatched. It should be noted that it is not possible to sensibly define a thickness of unmatched surfaces in the manner described above. As a final example, figure 10 illustrates a tapered rib cross-section. Here ab, cd and gh are edges as in figure 9. Lines aj and ed are matched to line bc, and the curved lines ef and ij are unmatched as in figure 9. However fg and hi are still considered matched despite the taper. Clearly, if the taper is extreme it is possible that the surfaces forming the tapered ribs may not be matched.

When surfaces have been classified it is possible to assign to elements on matched surfaces a thickness equal to the distance between the surfaces. Elements on edge surfaces are given the thickness of the matched surfaces to which they are attached. Finally elements on unmatched surfaces are given the average thickness of surrounding elements on matched surfaces.

According to the present invention, the mesh on each side of the object is analyzed. A key aspect in this is obtaining a similar flow front on each side of the matched surfaces. As the entry point for flow is the injection node and is selected by the user, the method ensures that, regardless of where the user chooses to inject plastic, all matched surfaces near the point are tied to the injection node. "Tied" implies that the same pressure and temperature of melt at the injection node is given to all other tied nodes.

Figure 11 shows a cross-section of a rectangular plate. Point A is where the user chooses to inject plastic, point AA is the corresponding point on the other side of the surface. Point AA is automatically determined in accordance with the invention using the information from the classification of surfaces described above. Injection at this point ensures that the flow is matched on top and bottom surfaces. Similarly, point B is the point chosen by the user and BB is the corresponding point determined by the method in accordance with the invention to ensure that flow is matched along top and bottom surfaces.

The selection of injection node(s) can be quite complex. This is illustrated in figure 12, which shows an object composed of intersecting plates. The small arrow near the point of intersection of the plates indicates the user selected injection point. Figure 13 is an enlarged view of the injection area and shows the actual injection points required to allow the flow to emanate correctly from the selected point. In this case eight injection points are required one of which is supplied by the user and the other seven are determined by the invention.

This method identifies which points need to be linked to the selected injection point with the concept of matching. For a given injection point specified by the user, a set consisting of all surfaces which are matched to all surfaces connected to the injection point is defined. The following steps are then performed:
1. For each surface in this set, the point closest to the selected injection point is noted. These closest points form a set of points that are potentially to be linked to the user selected injection point.
2. Each member of the set of potential injection points is checked to see if it is already an injection point specified by the user. If it has already been so determined, it is omitted from the set.
3. For each potential injection point remaining, a set consisting of all surfaces which are matched to all surfaces connected to the potential injection point is defined.

These steps are repeated until the set of potential points is unchanged. The set then forms the set of points to be linked to the user specified injection point.

This procedure may be readily understood for the simple geometry of two crossed plates, for which the user specifies injection at the intersection of the plates. In the event that the surfaces connected to the specified injection point(s) are not matched to any other surfaces, no attempt is made to link other points to the injection point(s). Instead, flow is allowed to emanate until it reaches points attached to surfaces that are matched to opposing surfaces. The flow fronts are then synchronised on the opposing surfaces by assigning links between points on the opposing surfaces in a manner similar to that described above for linking points to the injection point.

Analysis uses a Hele-Shaw type solver. The injection flow rate is approximately double that for the volume of the object as each element in the surface mesh has a thickness equal to the gap thickness and so the mesh volume is approximately double that of the object. The time step for flow front advancement is determined by the geometric connectivity of the control volumes attached to each node.

The solver has the ability to synchronize flow on matched surfaces during analysis. Figure 14 shows a cross-section of a plate where it is assumed that the flow front is advancing from the left and is leading a little on the top surface. By definition each node may be empty, partially filled or filled. On each time step, whether all the nodes belonging to an element are filled is checked. The instant this occurs the element is defined to be the current last element to fill and a line is drawn from its centroid to its matched element (the matched element is known from the surface classification described above) defining the check point. This "check line" is indicated in figure 14. The nearest node to the check point is then assigned the same pressure as the last node to fill, as indicated in figure 14. Flow synchronization is done for all matched surfaces and all elements near the flow front (on top and bottom surfaces) are checked at each time step.

Synchronization is not performed on unmatched surfaces.

An example highlighting the role of synchronization is shown in figure 15, which shows the cross-section of a ribbed plate. The flow will split physically and fill the vertical rib as well as continuing to the right. Owing to the use of the surface mesh it is necessary to impose synchronization or the flow will continue up through node F to the top of the rib and then down to E and C. This is performed by using matching. Since the element comprising nodes D and F and the element comprising nodes C and E will be matched (as they are associated with matched surfaces) it is possible to assign the same pressures at nodes to synchronize the fronts. This is illustrated in Figure 16. Here a line from the centroid of the element comprising nodes D and F is constructed to its matched element (comprising nodes C and E) to define the check point. As the nearest node to the check point is C, it is given the same pressure as node D for all subsequent time. Flow now emanates from node C as shown and so the flow goes up the rib on both sides as required. When establishing links for synchronization, links are only made to empty nodes to which are attached only empty nodes.

A sample result of the analysis according to the present invention is shown in figure 17. This figure corresponds to figure 3, which shows the results of the comparable, conventional analysis of the same solid model shown in figure 1. As the present invention uses a surface mesh rather than a midplane mesh, the results are displayed on the solid model (figure 17) rather than on the midplane representation as in conventional analysis (figure 3). Apart from being more natural for the operator, the display is visually more meaningful.

Fundamental quantities calculated by the invention, therefore, include:
- the position of the melt front at any time (known as "filling contours"),
- the pressure at the injection node and the pressure distribution throughout the plastic at any time during filling or packing phases (known as a "pressure distribution"), and
- the temperature of the plastic melt at any point within the part at any time during filling or packing phases (known as a "temperature distribution").
These may be displayed directly or processed to provide derived information to the user of the program, such as distributions of shear rate, shear stress, velocity, viscosity, direction of flow and orientation of reinforcing material. On the basis of this derived information and the fundamental calculated quantity data, changes to the component geometry, position of injection locations (gates), processing conditions used by the injection molding machine or material for molding may be evaluated for their efficacy in improving the quality or manufacturability of the part. This is generally an iterative process in which an analysis is performed, results are considered and changes made to bring about an improvement. Another analysis is then performed to ensure that the changes have indeed improved the results. Frequently changes to the part geometry are revealed. These are made in the CAD system and the revised model is subjected to further analysis. It is this aspect which is assisted by the invention as the need for the designer to recreate a new model for analysis every time a change is made is removed.

Thus, an increase in the speed of evaluating of proposed part shapes is achieved.

Modifications within the scope of the invention may readily be effected by persons skilled in the art. For example, linking may be performed in alternative methods such as, where multiple injection points are selected by a user, assigning the same flow rate to the linked nodes. It is to be understood, therefore, that this invention is not limited to the particular embodiments described by way of example hereinabove.

## Claims

1. A computer-implemented method for producing simulations of fluid flow within a three dimensional object, the method comprising:
specifying first and second generally opposed surfaces of said object,
matching each elements of said first surface with an element of said second surfaces between which a reasonable thickness may be defined, wherein matched elements of said first surface constitute a first set of matched elements and matched elements of said second surface constitute a second set of matched elements,
specifying a fluid injection point,
performing a flow analysis using each set of said matched elements, and
synchronizing flow fronts resulting from said flow analysis along said first and second surfaces,
whereby the resulting flow fronts along said first and second surfaces are synchronized.

2. A method as claimed in claim 1, further comprising forming first and second representations of said first and second surfaces, respectively, wherein said first and second representations comprise first and second meshes or lattices respectively, and wherein said elements are interstices of said first and second meshes or lattices.

3. A method as claimed in either claim 1 or 2 wherein each element of each of said matched pairs of elements is assigned respectively said thickness.

4. A method as claimed in any one of claims 1 to 3 wherein said flow fronts are first synchronized after the commencement of said flow analysis.

5. A method as claimed in any one of the preceding claims wherein said injection point remains linked to locations on said first and second surfaces at substantially all times in said flow analysis subsequent to being first so linked.

6. A method as claimed in claim 1, wherein performing said flow analysis using each set of said matched elements comprises performing a flow analysis using said first set of matched elements and adapting said flow analysis to said second set of matched elements.

7. A method as claimed in claim 1 wherein performing said flow analysis comprises matching pressure or matching pressure and temperature.

8. A method as claimed in claim 1 wherein said injection point is linked to all locations on said first and second surfaces from which flow may emanate.

9. A method as claimed in claim 8 wherein said injection point is first linked to all said locations from substantially the commencement of said flow analysis.

10. A method as claimed in either claim 8 or 9 wherein said injection point remains linked to all said locations at substantially all times in said flow analysis subsequent to being first so linked.

11. A method as claimed in any one of the preceding claims wherein said injection point is one of a plurality of injection points.

12. A method as claimed in any one of the preceding claims wherein synchronization of said flow fronts is checked periodically.

13. A method as claimed in claim 12 wherein said checking is performed at each time step.

14. A method as claimed in any one of the preceding claims wherein said flow fronts are synchronized if found not to be or no longer to be synchronized.

15. A method as claimed in any one of the preceding claims wherein said first and second generally opposed surfaces are one of a plurality of pairs of generally opposed surfaces.

16. A method as claimed in any one of the preceding claims wherein any unmatched elements of said first and second surfaces, being elements that could not be matched, are assigned thicknesses being the average of the thicknesses of adjacent matched elements where such adjacent matched elements exist, or of adjacent unmatched elements where such adjacent matched elements do not exist and said adjacent unmatched elements have been assigned thicknesses.

17. A method as claimed in claim 16 wherein each element of an edge surface, being a surface between said first and second surfaces, and adjacent to either of said first or second surface is assigned a thickness proportional to the thickness of the element of said first or second surface to which said element of said edge surface is adjacent.

18. A method as claimed in claim 17 wherein each said element of an edge surface is assigned a thickness between 0.5 and 1.5 times said thickness of the element of said first or second surface to which said element of said edge surface is adjacent.

19. A method as claimed in claim 18 wherein each said element of an edge surface is assigned a thickness between 0.7 and 0.9 times said thickness of the element of said first or second surface to which said element of said edge surface is adjacent.

20. A method as claimed in claim 17 wherein each element of an edge surface not adjacent to said first or second surface is assigned a thickness being the average of the thicknesses of adjacent elements of said edge surface that have been assigned thicknesses.

21. A method as claimed in any one of the preceding claims wherein flow is simulated at a rate directly proportional to a desired flow rate for the object.

22. A method as claimed in claim 21 wherein said rate is proportional to the ratio of computational domain volume of said object to real volume of said object.

23. A method as claimed in claim 22 wherein said rate is substantially equal to the ratio of computational domain volume of said object to real volume of said object.

24. A method as claimed in any one of the preceding claims wherein said method is performed with first and second representations of said first and second surfaces respectively comprising first and second meshes or lattices respectively, wherein said elements are interstices of said first and second meshes or lattices.

25. A method as claimed in claim 24 wherein said method includes creating said first and second representations.

26. A method as claimed in either claim 24 or 25 wherein said method includes creating improved representations of said first and second surfaces, whereby said elements are elements of said improved representations and said method is performed with said improved representations.

27. A method as claimed in any one of claims 24 to 26 wherein said first and second representations are, or are a part of, a representation or representations for stereolithography of said object.

28. A method as claimed in any one of the preceding claims wherein said elements are triangular or quadrilateral.

29. A method as claimed in any one of the preceding claims wherein said method includes corrections for non-isothermal temperature fields and/or non-Newtonian fluids.

30. A method as claimed in claim 1, comprising:
providing or creating first and second representations of said first and second surfaces respectively;
creating first and second improved representations from said first and second representations respectively;
performing said method with said first and second improved representations of said respective surfaces, whereby each element of said first surface comprises a respective element of said first improved representation and each element of said second surface comprises a respective element of said second improved representation, so that matching each element of said first surface with an element of said second surface comprises matching each element of said first improved representation with an element of said second improved representation, said first set of matched elements comprise matched elements of said first improved representation, said second set of matched elements comprise matched elements of said first improved representation and said injection point is linked to all locations on said first and second improved representations from which flow may emanate such that resulting flow fronts along said first and second improved representations are synchronized.

31. A method as claimed in claim 30, wherein said first and second representations are, or are a part of, a representation or representations for stereolithography of said object.

32. A method of manufacturing an object having first and second generally opposed surfaces, including simulating fluid flow within said object according to the method of any one of the preceding claims.

33. A computer program product stored on a computer readable medium adapted for causing a computer to perform the steps of the method of any one of claims 1 to 32.

34. A computer readable medium, having a program recorded thereon, where the program is to make a computer execute a method defined in any one of claims 1 to 32.

## Patentansprüche

1. Ein computerimplementiertes Verfahren zum Erzeugen von Simulationen eines Fluidflusses in einem dreidimensionalen Objekt, wobei das Verfahren umfasst:
Festlegen einer ersten und einer zweiten Oberfläche des Objekts, die einander allgemein gegenüberliegen,
Abstimmen jedes Elements der ersten Oberfläche mit einem Element der zweiten Oberfläche, zwischen denen eine sinnvolle Dicke definiert werden kann, wobei abgestimmte Elemente der ersten Oberfläche einen ersten Satz abgestimmter Elemente konstituieren und abgestimmte Elemente der zweiten Oberfläche einen zweiten Satz abgestimmter Elemente konstituieren,
Festlegen eines Fluid-Einspritzpunkts,
Durchführen einer Flussanalyse unter Verwendung jedes Satzes abgestimmter Elemente, und
Synchronisieren von Flussfronten, die sich aus der Flussanalyse entlang der ersten und der zweiten Oberfläche ergeben,
wodurch die sich ergebenden Flussfronten entlang der ersten und der zweiten Oberfläche synchronisiert werden.

2. Ein Verfahren gemäß Anspruch 1, das ferner ein Bilden einer ersten und einer zweiten Darstellung der ersten beziehungsweise der zweiten Oberfläche umfasst, wobei die erste und die zweite Darstellung ein erstes beziehungsweise ein zweites Netz oder Gitter umfassen und wobei die Elemente Zwischenräume des ersten und des zweiten Netzes oder Gitters sind.

3. Ein Verfahren gemäß Anspruch 1 oder 2, bei dem jedem Element eines jeden der abgestimmten Paare von Elementen jeweils die Dicke zugewiesen wird.

4. Ein Verfahren gemäß einem der Ansprüche 1 bis 3, bei dem die Flussfronten nach dem Beginn der Flussanalyse zum ersten Mal synchronisiert werden.

5. Ein Verfahren gemäß einem der vorhergehenden Ansprüche, bei dem der Einspritzpunkt zu im Wesentlichen jedem Zeitpunkt in der Flussanalyse mit Stellen auf der ersten und der zweiten Oberfläche verbunden bleibt, nachdem er zum ersten Mal so verbunden wurde.

6. Ein Verfahren gemäß Anspruch 1, bei dem das Durchführen der Flussanalyse unter Verwendungjedes Satzes der abgestimmten Elemente ein Durchführen einer Flussanalyse unter Verwendung des ersten Satzes von abgestimmten Elementen und ein Anpassen der Flussanalyse an den zweiten Satz von abgestimmten Elementen umfasst.

7. Ein Verfahren gemäß Anspruch 1, bei dem das Durchführen der Flussanalyse ein Abstimmen des Druckes oder ein Abstimmen des Druckes und der Temperatur umfasst.

8. Ein Verfahren gemäß Anspruch 1, bei dem der Einspritzpunkt mit allen Stellen auf der ersten und der zweiten Oberfläche, von denen ein Fluss ausgehen kann, verbunden wird.

9. Ein Verfahren gemäß Anspruch 8, bei dem der Einspritzpunkt im Wesentlichen vom Beginn der Flussanalyse an mit allen besagten Stellen verbunden wird.

10. Ein Verfahren gemäß Anspruch 8 oder 9, bei dem der Einspritzpunkt zu im Wesentlichen jedem Zeitpunkt in der Flussanalyse mit allen besagten Stellen verbunden bleibt, nachdem er zum ersten Mal so verbunden wurde.

11. Ein Verfahren gemäß einem der vorhergehenden Ansprüche, bei dem der Einspritzpunkt einer von einer Mehrzahl von Einspritzpunkten ist.

12. Ein Verfahren gemäß einem der vorhergehenden Ansprüche, bei dem eine Synchronisierung der Flussfronten regelmäßig geprüft wird.

13. Ein Verfahren gemäß Anspruch 12, bei dem das Prüfen bei jedem Zeitschritt durchgeführt wird.

14. Ein Verfahren gemäß einem der vorhergehenden Ansprüche, bei dem die Flussfronten synchronisiert werden, wenn festgestellt wird, dass sie nicht oder nicht mehr synchronisiert sind.

15. Ein Verfahren gemäß einem der vorhergehenden Ansprüche, bei dem die erste und die zweite Oberfläche, die einander allgemein gegenüberliegen, eines von einer Mehrzahl von Paaren von allgemein gegenüberliegenden Oberflächen sind.

16. Ein Verfahren gemäß einem der vorhergehenden Ansprüche, bei dem jeglichen nichtabgestimmten Elementen der ersten und der zweiten Oberfläche, da sie Elemente sind, die nicht abgestimmt werden konnten, Dicken zugewiesen werden, die der Durchschnitt der Dicken benachbarter abgestimmter Elemente, wo derartige benachbarte abgestimmte Elemente existieren, sind, oder Dicken von benachbarten nichtabgestimmten Elementen zugewiesen werden, wo derartige benachbarte abgestimmte Elemente nicht existieren und den benachbarten nichtabgestimmten Elementen Dicken zugewiesen wurden.

17. Ein Verfahren gemäß Anspruch 16, bei dem jedem Element einer Kantenoberfläche, die eine Oberfläche zwischen der ersten und der zweiten Oberfläche ist und entweder zu der ersten oder der zweiten Oberfläche benachbart ist, eine Dicke zugewiesen wird, die proportional zu der Dicke des Elements der ersten oder der zweiten Oberfläche ist, zu dem das Element der Kantenoberfläche benachbart ist.

18. Ein Verfahren gemäß Anspruch 17, bei dem jedem besagten Element einer Kantenoberfläche eine Dicke zugewiesen wird, die zwischen dem 0,5-fachen und dem 1,5-fachen der Dicke des Elements der ersten oder der zweiten Oberfläche, zu dem das Element der Kantenoberfläche benachbart ist, beträgt.

19. Ein Verfahren gemäß Anspruch 18, bei dem jedem besagten Element einer Kantenoberfläche eine Dicke zugewiesen wird, die zwischen dem 0,7-fachen und dem 0,9-fachen der Dicke des Elements der ersten oder der zweiten Oberfläche, zu dem das Element der Kantenoberfläche benachbart ist, beträgt.

20. Ein Verfahren gemäß Anspruch 17, bei dem jedem Element einer Kantenoberfläche, das nicht zu der ersten oder der zweiten Oberfläche benachbart ist, eine Dicke zugewiesen wird, die die durchschnittliche Dicke benachbarter Elemente der Kantenoberfläche, denen Dicken zugewiesen wurden, beträgt.

21. Ein Verfahren gemäß einem der vorhergehenden Ansprüche, bei dem ein Fluss bei einer Rate simuliert wird, die direkt proportional zu einer gewünschten Flussrate für das Objekt ist.

22. Ein Verfahren gemäß Anspruch 21, bei dem die Rate proportional zu dem Verhältnis des Rechenbereichsvolumens des Objekts zu dem echten Volumen des Objekts ist.

23. Ein Verfahren gemäß Anspruch 22, bei dem die Rate im Wesentlichen gleich dem Verhältnis des Rechenbereichsvolumens des Objekts zu dem echten Volumen des Objekts ist.

24. Ein Verfahren gemäß einem der vorhergehenden Ansprüche, wobei das Verfahren mit einer ersten und einer zweiten Darstellung der ersten beziehungsweise der zweiten Oberfläche durchgeführt wird, die eine erstes beziehungsweise ein zweites Netz oder Gitter umfassen, wobei die Elemente Zwischenräume des ersten und des zweiten Netzes oder Gitters sind.

25. Ein Verfahren gemäß Anspruch 24, wobei das Verfahren ein Erzeugen der ersten und der zweiten Darstellung umfasst.

26. Ein Verfahren gemäß Anspruch 24 oder 25, wobei das Verfahren ein Erzeugen verbesserter Darstellungen der ersten und zweiten Oberflächen umfasst, wodurch die Elemente Elemente der verbesserten Darstellungen sind und das Verfahren mit den verbesserten Darstellungen durchgeführt wird.

27. Ein Verfahren gemäß einem der Ansprüche 24 bis 26, bei dem die erste und die zweite Darstellung eine Darstellung oder Darstellungen für eine Stereolithographie des Objekts sind oder ein Teil derselben sind.

28. Ein Verfahren gemäß einem der vorhergehenden Ansprüche, bei dem die Elemente dreieckig oder viereckig sind.

29. Ein Verfahren gemäß einem der vorhergehenden Ansprüche, wobei das Verfahren Korrekturen für nicht-isotherme Temperaturfelder und/oder nicht-Newtonsche Fluide umfasst.

30. Ein Verfahren gemäß Anspruch 1, das folgende Schritte umfasst:
Liefern oder Erzeugen einer ersten und einer zweiten Darstellung der ersten beziehungsweise der zweiten Oberfläche;
Erzeugen einer ersten und einer zweiten verbesserten Darstellung aus der ersten beziehungsweise der zweiten Darstellung;
Durchführen des Verfahrens mit der ersten und der zweiten verbesserten Darstellung der jeweiligen Oberflächen, wodurch jedes Element der ersten Oberfläche ein jeweiliges Element der ersten verbesserten Darstellung umfasst und jedes Element der zweiten Oberfläche ein jeweiliges Element der zweiten verbesserten Darstellung umfasst, so dass ein Abstimmen jedes Elements der ersten Oberfläche mit einem Element der zweiten Oberfläche ein Abstimmen jedes Elements der ersten verbesserten Darstellung mit einem Element der zweiten verbesserten Darstellung umfasst, wobei der erste Satz von abgestimmten Elementen abgestimmte Elemente der ersten verbesserten Darstellung umfasst, wobei der zweite Satz abgestimmter Elemente abgestimmte Elemente der ersten verbesserten Darstellung umfasst und der Einspritzpunkt mit allen Stellen auf der ersten und der zweiten verbesserten Darstellung verbunden wird, von denen ein Fluss ausgehen kann, so dass sich ergebende Flussfronten entlang der ersten und der zweiten verbesserten Darstellung synchronisiert werden.

31. Ein Verfahren gemäß Anspruch 30, bei dem die erste und die zweite Darstellung eine Darstellung oder Darstellungen für eine Stereolithographie des Objekts sind oder ein Teil derselben sind.

32. Ein Verfahren zum Herstellen eines Objekts, das eine erste und eine zweite Oberfläche aufweist, die einander allgemein gegenüberliegen, einschließlich eines Simulierens eines Fluidflusses in dem Objekt gemäß dem Verfahren eines der vorhergehenden Ansprüche.

33. Ein Computerprogrammprodukt, das auf einem computerlesbaren Medium gespeichert ist, das ausgelegt ist, einen Computer zu veranlassen, die Schritte des Verfahrens gemäß einem der Ansprüche 1 bis 32 durchzuführen.

34. Ein computerlesbares Medium, auf dem ein Programm aufgezeichnet ist, wobei das Programm darin besteht, einen Computer zu veranlassen, ein Verfahren auszuführen, das in einem der Ansprüche 1 bis 32 definiert ist.

## Revendications

1. Méthode implémentée par ordinateur en vue de la production de simulations d'écoulement de fluide à l'intérieur d'un objet à trois dimensions, la méthode comprenant :
la spécification d'une première et d'une seconde surfaces généralement opposées dudit objet,
la correspondance de chaque élément de ladite première surface avec un élément de ladite seconde surface entre lesquelles une épaisseur raisonnable peut être définie,
dans laquelle les éléments correspondus de ladite première surface constituent un premier jeu d'éléments correspondus et les éléments correspondus de ladite seconde surface constituent un second jeu d'éléments correspondus
la spécification d'un point d'injection de fluide,
la réalisation d'une analyse d'écoulement utilisant chaque jeu desdits éléments correspondus, et
la synchronisation des fronts de fluide résultant de ladite analyse de fluide le long desdites première et seconde surfaces,
où les fronts d'écoulement résultant le long desdites première et secondes surfaces sont synchronisés.

2. Méthode selon la revendication 1, comprenant par ailleurs respectivement la formation de première et secondes représentations desdites première et seconde surface, dans laquelle lesdites première et seconde représentations comprennent respectivement des première et seconde mailles ou réseaux, et dans lesquelles lesdits éléments sont des interstices des première et seconde mailles ou réseaux.

3. Méthode telle que revendiquée soit dans la revendication 1, soit dans la revendication 2, dans laquelle chaque élément de chacune desdites paires d'éléments correspondus est assigné respectivement à ladite épaisseur.

4. Méthode telle que revendiquée dans une quelconque des revendications 1 à 3, dans laquelle lesdits fronts d'écoulement sont synchronisés en premier après le commencement de ladite analyse d'écoulement.

5. Méthode telle que revendiquée dans une quelconque des revendications précédentes, dans laquelle ledit point d'injection demeure relié à des emplacements sur lesdites première et seconde surfaces à principalement tous moments dans ladite analyse d'écoulement de fluide ultérieurement après avoir été relié premièrement ainsi.

6. Méthode telle que revendiquée dans la revendication 1, dans laquelle l'exécution de ladite analyse d'écoulement utilisant chaque jeu desdits éléments correspondus comprend l'exécution d'une analyse d'écoulement utilisant ledit premier jeu des éléments correspondus et l'adaptation de ladite analyse d'écoulement audit second jeu d'éléments correspondus.

7. Méthode telle que revendiquée dans la revendication 1, dans laquelle l'exécution de ladite analyse d'écoulement comprend une pression correspondante ou une pression et une température correspondantes.

8. Méthode telle que revendiquée dans la revendication 1, dans laquelle ledit point d'injection est relié à tous les emplacements sur ladite première et seconde surfaces desquelles l'écoulement peut émaner.

9. Méthode telle que revendiquée dans la revendication 8, dans laquelle ledit point d'injection est relié en premier à tous lesdits emplacements à partir principalement du commencement de ladite analyse d'écoulement.

10. Méthode telle que revendiquée dans une quelconque des revendications 8 ou 9, dans laquelle ledit point d'injection demeure relié à tous lesdits emplacements à principalement tous moments dans ladite analyse d'écoulement de fluide ultérieurement après avoir été relié premièrement ainsi.

11. Méthode telle que revendiquée dans une quelconque des revendications précédentes, dans laquelle ledit point d'injection est un quelconque d'une pluralité de points d'injection.

12. Méthode telle que revendiquée dans une quelconque des revendications précédentes, dans laquelle la synchronisation desdits fronts d'écoulement est contrôlée périodiquement.

13. Méthode telle que revendiquée dans la revendication 12, dans laquelle ledit contrôle est réalisé à chaque étape de temps.

14. Méthode telle que revendiquée dans une quelconque des revendications précédentes, dans laquelle lesdits fronts d'écoulement sont synchronisés s'il a été trouvé qu'ils n'ont pas ou plus été synchronisés.

15. Méthode telle que revendiquée dans une quelconque des revendications précédentes, dans laquelle lesdites première et seconde surface opposées généralement sont des quelconques d'une pluralité de paires de surfaces opposées généralement.

16. Méthode telle que revendiquée dans une quelconque des revendications précédentes, dans laquelle quelques éléments non correspondus desdites première et seconde surfaces étant des éléments qui n'ont pas pu être correspondus sont des épaisseurs étant la moyenne des épaisseurs d'éléments correspondus adjacents, où de tels éléments correspondus adjacents existent, ou d'éléments non correspondus adjacents, où de tels éléments correspondus adjacents n'existent pas et lesdits éléments non correspondus adjacents sont des épaisseurs assignées.

17. Méthode telle que revendiquée dans la revendication 16, dans laquelle chaque élément d'une surface de flanc étant une surface entre lesdites première et secondes surfaces, et adjacente soit à ladite première ou seconde surface est assigné à une épaisseur proportionnelle à l'épaisseur de l'élément desdites première ou seconde surface auxquelles ledit élément de ladite surface de flanc est adjacent.

18. Méthode telle que revendiquée dans la revendication 17, dans laquelle chaque dit élément d'une surface de flanc est assigné à une épaisseur entre 0,5 et 1,5 fois ladite épaisseur de l'élément desdites première ou seconde surface auxquelles ledit élément de ladite surface de flanc est adjacent.

19. Méthode telle que revendiquée dans la revendication 18, dans laquelle chaque dit élément d'une surface de flanc est assigné à une épaisseur entre 0,7 et 0,9 fois ladite épaisseur de l'élément desdites première ou seconde surface auxquelles ledit élément de ladite surface de flanc est adjacent.

20. Méthode telle que revendiquée dans la revendication 17, dans laquelle chaque dit élément d'une surface de flanc non adjacent à ladite première ou seconde surface est assigné à une épaisseur étant la moyenne des épaisseurs d'éléments adjacents de ladite surface de flanc qui ont été des épaisseurs assignées.

21. Méthode telle que revendiquée dans une quelconque des revendications précédentes dans laquelle l'écoulement est simulé à un rapport directement proportionnel à un rapport d'écoulement souhaité pour l'objet.

22. Méthode telle que revendiquée dans la revendication 21, dans laquelle ledit rapport est proportionnel au rapport du volume de domaine informatique dudit objet par rapport au volume réel dudit objet.

23. Méthode telle que revendiquée dans la revendication 22, dans laquelle ledit rapport est principalement égal au rapport du volume de domaine informatique dudit objet par rapport au volume réel dudit objet.

24. Méthode telle que revendiquée dans une quelconque des revendications précédentes dans laquelle ladite méthode est exécutée avec des première et seconde représentations respectivement desdites première et seconde surfaces comprenant respectivement des première et seconde mailles ou réseaux, dans laquelle lesdits éléments sont des interstices des première et seconde mailles ou réseaux.

25. Méthode telle que revendiquée dans la revendication 22, dans laquelle ladite méthode comporte la création de première et seconde représentations.

26. Méthode telle que revendiquée soit dans la revendication 24, soit dans la revendication 25, dans laquelle ladite méthode comporte la création de représentation améliorées desdites première et seconde surfaces, lesdits éléments étant des éléments desdites représentations améliorées et ladite méthode étant réalisée avec lesdites représentations améliorées.

27. Méthode telle que revendiquée dans une quelconque des revendications 24 à 26, dans laquelle lesdites première et seconde représentation sont une représentation ou des représentations ou une partie de celles-ci pour la stéréolithographie dudit objet.

28. Méthode telle que revendiquée dans une quelconque des revendications précédentes, dans laquelle lesdits éléments sont triangulaires ou quadrilatères.

29. Méthode telle que revendiquée soit dans une quelconque des revendications précédentes, dans laquelle ladite méthode comporte des corrections pour les champs de température non-isothermes et/ou les fluides non newtoniens.

30. Méthode telle que revendiquée dans la revendication 1, comprenant :
la livraison ou la création de première et secondes représentations respectivement desdites première et seconde surface ;
la création de première et secondes représentations améliorées respectivement desdites première et seconde représentations ;
la réalisation de ladite méthode avec lesdites première et seconde représentation améliorées desdites surfaces respectives, chaque élément de ladite première surface comprenant un élément respectif de ladite première représentation améliorée et chaque élément de ladite seconde surface comprenant un élément respectif de ladite seconde représentation améliorée, de sorte que la correspondance de chaque élément de ladite première surface avec un élément de ladite seconde surface comprend la correspondance de chaque élément de ladite première représentation améliorée avec un élément de ladite seconde représentation améliorée, ledit premier jeu des éléments correspondus comprend des éléments correspondus de ladite première représentation améliorée, ledit second jeu des éléments correspondus comprend des éléments correspondus de ladite première représentation améliorée et ledit point d'injection est relié à tous les emplacements sur lesdites première et seconde surfaces desquelles l'écoulement peut émaner de sorte que les fronts d'écoulement résultant le long des première et seconde représentations améliorées sont synchronisés.

31. Méthode telle que revendiquée dans la revendication 30, dans laquelle lesdites première et seconde représentation sont une représentation ou des représentations ou une partie de celles-ci pour la stéréolithographie dudit objet.

32. Méthode de fabrication d'un objet possédant des première et seconde surfaces généralement opposées, comportant la simulation d'un écoulement de fluide à l'intérieur dudit objet selon la méthode d'une quelconque des revendications précédentes.

33. Produit de programme d'ordinateur stocké sur un support lisible par ordinateur, adapté pour entraîner l'ordinateur à réaliser les étapes de la méthode d'une quelconque des revendications 1 à 32.

34. Support lisible par ordinateur, possédant un programme enregistré sur celui-ci, où le programme est destiné à faire exécuter l'ordinateur une méthode définie selon une quelconque des revendications 1 à 32.
